# EUROPÄISCHE PATENTSCHRIFT

(11) **EP 2 324 741 B1**
(45) Veröffentlichungstag und Bekanntmachung des Hinweises auf die Patenterteilung: **18.01.2012**
(21) Anmeldenummer: 10188579.6
(22) Anmeldetag: 22.10.2010
(51) Int. Cl.: A47J 39/00

(54) **Tablett-Transportwagen**
Tablet transport vehicle
Chariot de transport à tablette

(30) Priorität: 29.10.2009 DE 102009051163
(43) Veröffentlichungstag der Anmeldung: 25.05.2011
(73) Patentinhaber: HUPFER Metallwerke GmbH & Co. KG, 48653 Coesfeld (DE)
(72) Erfinder:
(74) Vertreter: Lorenz, Bernd Ingo Thaddeus

(56) Entgegenhaltungen:
- EP-A1- 0 656 186
- US-A- 5 159 973

## Beschreibung

Die Erfindung betrifft einen Tablett-Transportwagen gemäß dem Oberbegriff von Anspruch 1, mit einem von einer Frontseite, einer Rückseite und Seitenwänden begrenzten Innenraum, mit zwei Trennwänden, die sich von der Frontseite zur Rückseite erstrecken und mehrere vertikal beabstandete Aufnahmeschlitze zum Einschub von Speisentabletts aufweisen, und mit Türen zum Öffnen und Schließen des Innenraums. Der Innenraum ist durch die Trennwände in drei thermisch getrennte Räume unterteilt und nimmt vier Stapel von Speisentabletts auf, die jeweils an Auflageelementen an einer Seitenwand aufliegen und in den von den beiden Trennwänden begrenzten mittleren Raum überstehen. Dabei können an der Frontseite und der Rückseite jeweils zwei Speisentabletts nebeneinander sowie in den Aufnahmeschlitzen jeweils zwei Speisentabletts hintereinander angeordnet werden.

Ein solcher Tablett-Transportwagen ist für die Speisenverteilung z. B. im Krankenhausbereich einsetzbar. Eine Mittagsbestückung der Speisentabletts umfasst regelmäßig eine auf einem Teller angerichtete warme Speise und räumlich getrennt Beilageschalen für gekühlte oder kühl zu haltende Speisen. Entsprechend ist der Innenraum des Tablett-Transportwagens durch Trennwände in thermisch getrennte Räume unterteilt, die eine Warmzone für die warmen Speisen sowie eine Kaltzone für die Beilagenschalen bzw. kühl zu haltenden Speisen bilden.

Ein Tablett-Transportwagen mit den eingangs beschriebenen Merkmalen ist aus US 5 159 973 A bekannt. Der bekannte Transportwagen weist eine geschlossene Rückwand sowie an seiner Frontseite eine doppelflügelige Tür auf. Der Innenraum ist durch Trennwände in drei thermisch getrennte Räume unterteilt, wobei der mittlere Raum als Kühlzone ausgelegt und mit auswechselbaren eutektischen Kälteplatten bestückt ist. Die Kälteplatten sind schubladenartig in einem Gestell untergebracht, das außenseitige Führungsleisten für eine randseitige Auflage der Speisentabletts aufweist. Die Speisentabletts liegen an einem Ende auf den Führungsleisten des mittig angeordneten Gestells auf und sind an ihrem anderen Ende an Auflageelementen abgestützt, die an den Seitenwänden des Transportwagens angeordnet sind. Die Trennwände, welche Warmzonen von der Kühlzone thermisch trennen, sind keine tragenden Elemente und haben keine Führungs- und Stützungsfunktion für die Speisentabletts. Zur Aufnahme des hohen Gewichts der Speisentablettstapel muss das in der Kühlzone angeordnete Gestell massiv ausgebildet sein und nimmt infolge dessen einen beachtlichen Teil des Innenraums des Tablett-Transportwagens ein. Das Gestell lässt sich schlecht reinigen. Unbefriedigend ist insbesondere auch die Zugänglichkeit zu den Speisentabletts, die nur an der Frontseite aus dem Transportwagen entnommen werden können. Unbefriedigend ist auch die Zugänglichkeit zu den Speisentabletts, die nur an der Frontseite aus dem Transportwagen entnommen werden können. Im Hinblick auf die Bestückung des Transportwagens ist nachteilig, dass die an der selben Seite zugänglichen Speisentabletts nicht gleich ausgerichtet sind und folglich ein Teil der Speisentabletts beim Einschieben in den Transportwagen um 180° gedreht werden müssen. Im Regelfall sind die Speisentabletts mit Adresskarten versehen, die beispielsweise den Namen des Empfängers sowie Angaben zu der Tablettbestückung enthalten. Beim Drehen der Speisentabletts müssen diese Karten umgesteckt werden, was aufwändig und in der Praxis wenig praktikabel ist.

Aus EP 0 656 186 B1 ist ein Tablett-Transportwagen zur Aufnahme von zwei Speisentablett-Stapeln bekannt, wobei ein Stapel durch eine frontseitige Tür und der andere Stapel durch eine rückseitige Tür von außen zugänglich ist. Der Innenraum des Tablett-Transportwagens ist durch Trennwände in drei thermisch getrennte Räume unterteilt, wobei der mittlere Raum eine Warmzone für beide Speisentablett-Stapel bildet und die beiden äußeren Räume jeweils nur an einer Seite von außen zugänglich sind und eine Kühlzone für jeweils einen Stapel von Speisentabletts bilden. Es müssen Spezialtabletts verwendet werden, bei denen zwischen zwei Zonen für warme und gekühlte Speisen ein Zwischenraum angeordnet ist. Die beiden Zonen werden durch einen rückwärtigen Verbindungssteg zusammengehalten. Werden die Tabletts in den Transportwagen eingeschoben, greift eine der thermischen Trennwände in den Zwischenraum ein und separiert die beiden Zonen. Bei den Tabletts handelt es sich um aufwendige Spezialanfertigungen. Auch die Raumausnutzung des Tablett-Transportwagens ist unbefriedigend.

Vor diesem Hintergrund liegt der Erfindung die Aufgabe zugrunde, einen Tablett-Transportwagen anzugeben, der einen bedienungsfreundlichen Zugriff auf darin angeordnete Tabletts ermöglicht, sich durch einen besonders raumsparenden Aufbau auszeichnet und dessen Innenraum sich gut reinigen lässt.

Ausgehend von einem Tablett-Transportwagen mit den eingangs beschriebenen Merkmalen wird die Aufgabe erfindungsgemäß dadurch gelöst, dass einer der beiden von einer Seitenwand und einer Trennwand begrenzten Außenräume an der Frontseite durch eine feste Frontwand geschlossen ist, dass der andere ebenfalls von einer Seitenwand und einer Trennwand begrenzte Außenraum an der Rückseite eine feste Rückwand aufweist und dass an der Frontseite und der Rückseite zueinander diagonal versetzt Türen angeordnet sind, welche jeweils den mittleren Raum sowie einen der beiden Außenräume verschließen. Die Speisentabletts können von zwei Seiten aus dem Tablett-Transportwagen entnommen und eingeschoben werden. Die an einer Seite einzuschiebenden Speisentabletts haben stets dieselbe Ausrichtung, was die Handhabung beim Einsetzen der Speisentabletts in den Tablett-transportwagen vereinfacht. Die erfindungsgemäße Anordnung ermöglicht es, dass mehrere Personen an dem Transportwagen arbeiten, ohne dass sie sich gegenseitig behindern. Dabei sind die Trennwände zweckmäßig als tragende Elemente ausgebildet und bilden im Verbund mit der angrenzenden Front- bzw. Rückwand sowie der hieran angeschlossenen Seitenwand eine formstabile Anordnung.

Gemäß einer bevorzugten Ausführung der Erfindung sind die Trennwände für die thermische Trennung der Bereiche als tragende Elemente kammartig ausgebildet und weisen einen rückwärtigen Steg auf, der mit der angrenzenden Frontwand oder Rückwand verbunden ist. Die Trennwände sind erfindungsgemäß als tragende Elemente so ausgestaltet, dass sie im Verbund mit der angrenzenden Frontwand bzw. Rückwand sowie der hieran angeschlossenen Seitenwand beispielsweise das Gewicht von zwei Stapeln aus jeweils zehn mit Geschirrkomponenten bestückten Speisentabletts aufnehmen können. Die Speisentabletts sind bei dieser bevorzugten Ausgestaltung der Erfindung an den einer Seitenwand angeordneten Auflageelementen sowie in den Aufnahmeschlitzen einer Trennwand abgestützt und geführt und stehen mit einem vorkragenden Ende in den mittleren Raum vor. Der mittlere Raum, der thermisch von den beiden Außenräumen getrennt ist, enthält bei dieser bevorzugten Ausführung der Erfindung keine Tragkonstruktion für die Speisentabletts und lässt sich daher gut reinigen. Eine Abstützung des im mittleren Raum vorstehenden Endes der Speisentabletts z. B. in Form einer punktuellen Auflage, soll allerdings ebenfalls möglich und von der Erfindung umfasst sein. Der mittlere Raum kann eine Kammerbreite aufweisen, die sich nicht oder nicht wesentlich von der Breite der beidseitig angrenzenden Außenräume unterscheidet. Auch dies trägt dazu bei, dass sich die thermisch voneinander getrennten Räume des Innenraums gut und leicht reinigen lassen. Gemäß einer bevorzugten Ausführung der Erfindung weisen die jeweils von einer Seitenwand und einer Trennwand begrenzten beiden Außenräume dieselbe Breite auf und hat der von den Trennwänden begrenzte mittlere Raum eine Kammerbreite, die das 0,8-fache bis 1,2-fache der Breite eines Außenraums beträgt.

Die Seitenwände, die Frontwand und die Rückwand bestehen vorzugsweise aus formstabilen wärmegedämmten Paneelen, beispielsweise ausgeschäumten Blechpaneelen oder Blechpaneelen, die eine Einlage aus einem isolierenden Material enthalten. Zum Zwecke der Wärmedämmung sind auch die Türflügel der Türen zweckmäßig aus wärmegedämmten Paneelen gefertigt. Die thermischen Trennwände, die ebenfalls tragende Teile bilden, bestehen vorzugsweise aus Kunststoffplatten oder hochfesten Sandwichplatten.

In dem von den Trennwänden begrenzten Mittelraum kann ein Halter zur Aufnahme mindestens einer eutektischen Kältespeicherplatte angeordnet sein. Im Rahmen der Erfindung liegt es aber auch, dem Mittelraum anderweitige Temperiereinrichtungen zuzuordnen.

Die Türen des Tablett-Transportwagens sind vorzugsweise als Schwenktüren ausgebildet und weisen einen Türflügel auf, der um eine zur Seitenwand benachbarte Achse verschwenkbar ist und in der Öffnungsstellung außen an der Seitenwand des Transportwagens anliegt. Zweckmäßig ist die Breite der Türflügel etwas kleiner als die Breite der Seitenwand. Bei geöffneten Türen sind die Speisentabletts an der Frontseite sowie der Rückseite des Tablett-Transportwagens zugänglich, ohne dass der Zugriff durch die geöffneten Türflügel behindert wird. Wenn die Türflügel in der Öffnungsstellung an den Seitenwänden anliegen, kann der Tablett-Transportwagen problemlos auch bei geöffneten Türen verfahren werden.

In den Eckbereichen des Transportwagens sind zweckmäßig Stangen zum Greifen angeordnet, die sich vom Boden des Transportwagens bis zu einer oberen Abdeckung vertikal erstrecken. Die Türflügel sind zweckmäßig drehbeweglich an zwei der Stangen angeschlagen.

Im Folgenden wird die Erfindung anhand einer lediglich ein Ausführungsbeispiel darstellenden Zeichnung ausführlich erläutert. Es zeigen schematisch:

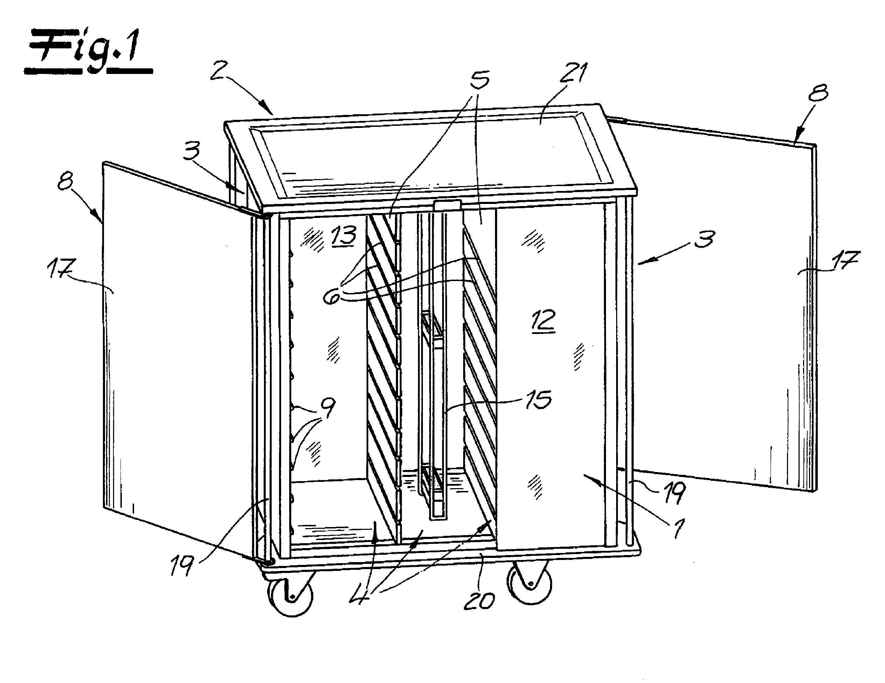

- **Fig. 1**: eine perspektivische Ansicht des Tablett-Transportwagens,
- **Fig. 2**: einen horizontalen Schnitt des Tablett-Transportwagens und

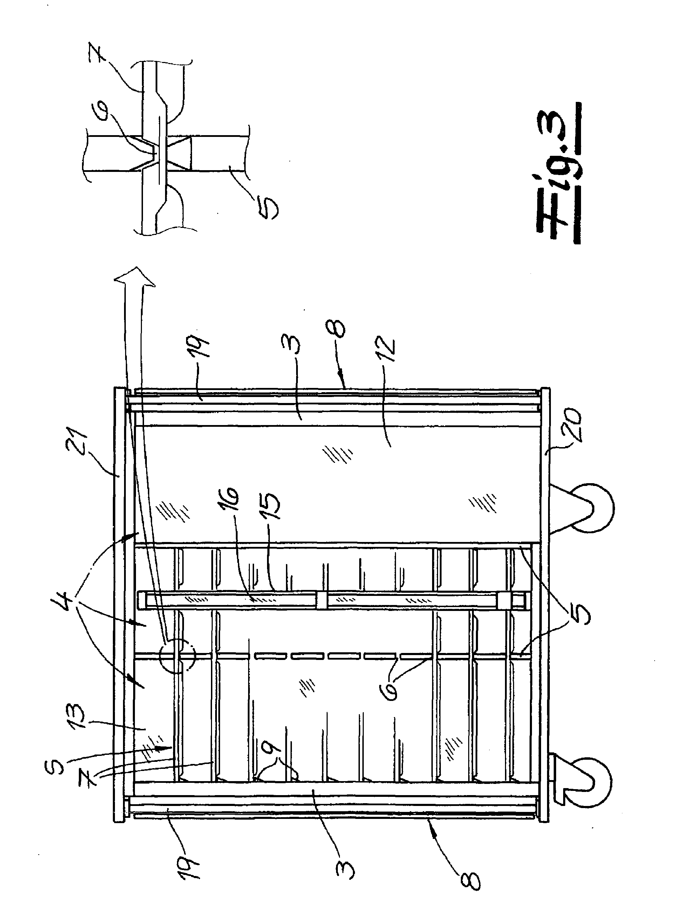

- **Fig. 3**: eine Seitenansicht des Tablett-Transportwagens mit vollständig geöffneten Türen.

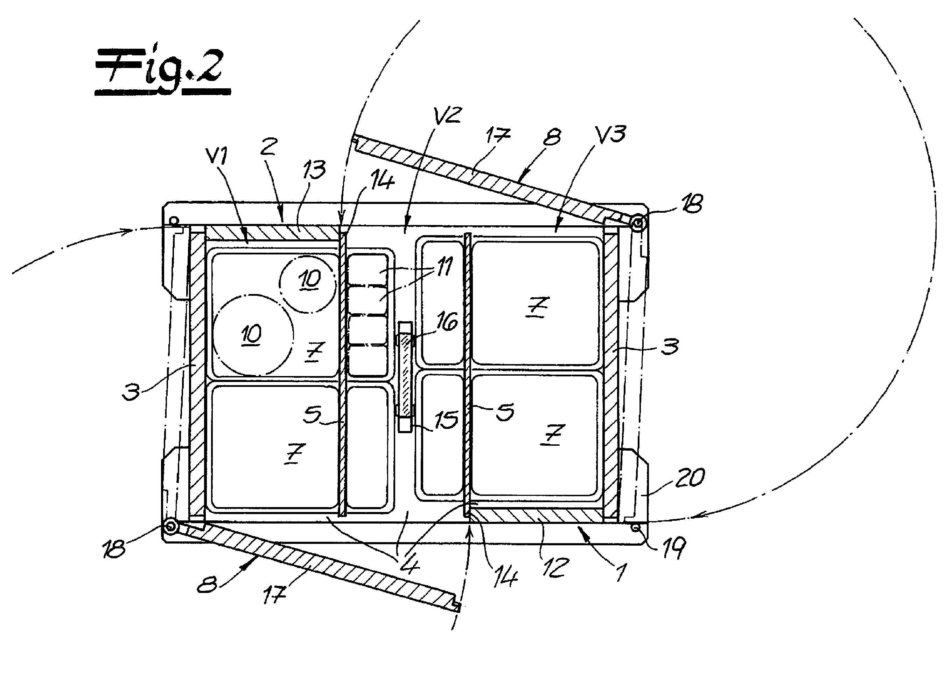

Der in den Figuren dargestellte Tablett-Transportwagen dient der Speisenverteilung z. B. im Krankenhausbereich. Er umfasst in seinem grundsätzlichen Aufbau einen von einer Frontseite 1, einer Rückseite 2 und Seitenwänden 3 begrenzten Innenraum 4, zwei Trennwände 5, die sich von der Frontseite zur Rückseite erstrecken und mehrere vertikal beabstandete Aufnahmeschlitze 6 zum Einschub von Speisentabletts 7 aufweisen, sowie Türen 8 zum Öffnen und Schließen des Innenraums. Der Innenraum 4 ist durch die Trennwände 5 in drei thermisch getrennte Räume V1, V2, V3 unterteilt und nimmt vier Stapel von Speisentabletts auf, die jeweils an Auflageelementen 9 an einer Seitenwand 3 aufliegen und in den von den beiden Trennwänden 5 begrenzten mittleren Raum V2 überstehen. Die Stapel umfassen beispielsweise jeweils zehn Speisentabletts 7, die mit auf Tellern 10 angerichteten warmen Speisen und räumlich hiervon getrennt mit Beilagenschalen 11 für Kaltspeisen bzw. kühl zu haltende Speisen bestückt sind. Insbesondere der Darstellung in Fig. 2 entnimmt man, dass an der Frontseite 1 sowie an der Rückseite 2 jeweils zwei Speisentabletts S nebeneinander sowie in den Aufnahmeschlitzen jeweils zwei Speisentabletts S hintereinander angeordnet werden können. Dabei ist die Anordnung der Trennwände 5 und die Konfiguration der Speisentabletts 7 so aufeinander abgestimmt, dass die Beilagenschalen 11 für Kaltspeisen bzw. kühl zu haltende Speisen in dem von zwei Trennwänden 5 begrenzten mittleren Raum V2 untergebracht sind und die auf Tellern 10 angerichteten warmen Speisen den beiden Außenräumen V1, V3 zugeordnet sind. Der von den Trennwänden 5 begrenzte mittlere Raum V2 bildet insofern eine Kühlzone, während die jeweils von einer Seitenwand 3 und einer Trennwand 5 begrenzten Außenräume V1, V3 Warmzonen darstellen, in denen sich eine höhere Temperatur einstellt als in dem mittleren Raum V2.

Insbesondere aus Fig. 2 ist ersichtlich, dass einer der beiden Außenräume V1, V3 an der Frontseite 1 durch eine feste Frontwand geschlossen ist und dass der andere Außenraum an der Rückseite 2 eine feste Rückwand 13 aufweist. An der Frontseite 1 und an der Rückseite 2 ist jeweils eine Tür 8 angeordnet, wobei die Türen 8 zueinander diagonal versetzt sind und jeweils den mittleren Raum V2 sowie einen der beiden Außenräume V1 oder V3 verschließen.

Die Trennwände 5 sind als tragende Elemente kammartig ausgebildet und weisen einen rückwärtigen Steg 14 auf, der mit der angrenzenden Frontwand oder Rückwand 13 verbunden ist. Die Trennwände 5 bilden im Verbund mit der angrenzenden Frontwand 13 bzw. Rückwand 13 sowie der hieran anschließenden Seitenwand 3 formstabile Tragkonstruktionen, die das Gewicht von zwei Stapeln S aus jeweils mehreren Speisentabletts 7 und darauf angeordneten Geschirrkomponenten aufnehmen. Die Speisentabletts 7 sind im Ausführungsbeispiel an den einer Seitenwand 3 zugeordneten Auflageelementen 9 sowie in den Aufnahmeschlitzen 6 einer Trennwand 5 abgestützt und geführt und stehen mit einem vorkragenden Ende in den mittleren Raum V2 vor. Der mittlere Raum V2 ist grundsätzlich einbautenfrei ausführbar und muss keine Tragkonstruktion zur Abstützung der Speisentabletts 7 enthalten. Eine Abstützung des im mittleren Raum V2 vorstehenden Endes der Speisentabletts 7, z. B. in Form einer punktuellen Auflage, ist jedoch ebenfalls möglich und soll von der Erfindung umfasst sein.

Die jeweils von einer Seitenwand 3 und einer Trennwand 5 begrenzten beiden Außenräume V1, V3 weisen dieselbe Breite auf. Der von den Trennwänden begrenzte mittlere Raum weist zweckmäßig eine Kammerbreite auf, die das 0,8-fache bis 1,2-fache der Breite eines Außenraums beträgt. Aufgrund der großen Kammerbreite, die sich nur wenig von der Breite der beiden Außenräume V1, V3 unterscheidet, lässt sich der mittlere Raum V2 gut reinigen.

Die Seitenwände 3, die Frontwand 12, die Rückwand 13 und vorzugsweise auch die Türflügel der Türen 8 bestehen vorzugsweise aus wärmegedämmten Paneelen, beispielsweise geschäumten oder mit einer Isoliereinlage versehenen Blechpaneelen. Die Trennwände können aus massiven Kunststoffplatten, z. B. aus dem Kunststoff POM, gefertigt sein.

Gemäß dem in den Figuren dargestellten Ausführungsbeispiel ist in dem von den Trennwänden 5 begrenzten Mittelraum V2 ein Halter 15 zur Aufnahme mindestens einer eutektischen Kältespeicherplatte 16 angeordnet. Der Halter 15 und die darin eingesetzten Kältespeicherplatten 16 können als seitlicher Anschlag für die Speisentabletts 7 genutzt werden, welcher verhindert, dass die Tabletts quer zur Einschubrichtung verrutschen. Der Halter 15 nimmt jedoch nicht das Gewicht der Speisentabletts 7 auf und kann daher aus leichten Profilen gefertigt werden. Zweckmäßig ist der Halter zu Reinigungszwecken ferner aus dem mittleren Raum V2 herausnehmbar.

Die Türen 8 sind als Schwenktüren ausgebildet und weisen einen Türflügel 17 auf, der um eine zur Seitenwand 3 benachbarte Achse 18 verschwenkbar ist und in der Öffnungsstellung außen an der Seitenwand 3 anliegt. Die Öffnungsstellung ist in Fig. 2 durch eine gestrichelte Linie dargestellt. Der Darstellung in Fig. 2 entnimmt man auch, dass die Breite der Türflügel 17 etwas kleiner ist als die Breite der Seitenwände 3, so dass die Türflügel 17 bei geöffneter Tür weder an der Frontseite 1 noch an der Rückseite 2 überstehen.

In den Eckbereichen des Transportwagens sind Stangen 19 zum Greifen angeordnet, die sich vom Boden 20 des Transportwagens bis zu einer oberen Abdeckung 21 vertikal erstrecken. Die Türflügel 17 sind im Ausführungsbeispiel und gemäß einer bevorzugten Ausführung der Erfindung drehbeweglich an zwei der Stangen 19 angeschlagen.

## Patentansprüche

1. Tablett-Transportwagen mit
einem von einer Frontseite (1), einer Rückseite (2) und Seitenwänden (3) begrenzten Innenraum (4),
zwei Trennwänden (5), die sich von der Frontseite (1) zur Rückseite (2) erstrecken und mehrere vertikal beabstandete Aufnahmeschlitze (6) zum Einschub von Speisentabletts (7) aufweisen, und
Türen (8) zum Öffnen und Schließen des Innenraums (4),
wobei der Innenraum (4) durch die Trennwände (5) in drei thermisch getrennte Räume (V1, V2, V3) unterteilt ist und vier Stapel (S) von Speisentabletts (7) aufnimmt, die jeweils an Auflageelementen (9) an einer Seitenwand (3) aufliegen und in den von den beiden Trennwänden (5) begrenzten mittleren Raum (V2) überstehen, wobei an der Frontseite (1) und der Rückseite (2) jeweils zwei Speisentabletts (7) nebeneinander sowie in den Aufnahmeschlitzen (6) jeweils zwei Speisentabletts (7) hintereinander angeordnet werden können, **dadurch gekennzeichnet, dass** einer der beiden von einer Seitenwand (3) und einer Trennwand (5) begrenzten Außenräume (V3) an der Frontseite (1) durch eine feste Frontwand (12) geschlossen ist, dass der andere ebenfalls von einer Seitenwand (3) und einer Trennwand (5) begrenzte Außenraum (V1) an der Rückseite (2) eine feste Rückwand (13) aufweist und dass an der Frontseite (1) und der Rückseite (2) zueinander diagonal versetzt Türen (8) angeordnet sind, welche den mittleren Raum (V2) sowie einen der beiden Außenräume (V1, V3) verschließen.

2. Tablett-Transportwagen nach Anspruch 1, **dadurch gekennzeichnet, dass** die Trennwände (5) als tragende Elemente kammartig ausgebildet sind und einen rückwärtigen Steg (14) aufweisen, der mit der angrenzenden Frontwand (12) oder Rückwand (13) verbunden ist.

3. Tablett-Transportwagen nach Anspruch 1 oder 2, **dadurch gekennzeichnet, dass** die Speisentabletts (7) an den einer Seitenwand (3) zugeordneten Auflageelementen (9) sowie in den Aufnahmeschlitzen (6) einer Trennwand (5) abgestützt und geführt sind und mit einem vorkragenden Ende in den mittleren Raum (V2) vorstehen.

4. Tablett-Transportwagen nach einem der Ansprüche 1 bis 3, **dadurch gekennzeichnet, dass** die Seitenwände (3), die Frontwand (12), die Rückwand (13) sowie die Türflügel (17) der Türen (8) aus wärmegedämmten Paneelen bestehen.

5. Tablett-Transportwagen nach einem der Ansprüche 1 bis 4, **dadurch gekennzeichnet, dass** die Trennwände (5) aus Kunststoffplatten bestehen.

6. Tablett-Transportwagen nach einem der Ansprüche 1 bis 5, **dadurch gekennzeichnet, dass** die jeweils von einer Seitenwand (3) und einer Trennwand (5) begrenzten beiden Außenräume (V1, V3) dieselbe Breite aufweisen und dass der von den Trennwänden (5) begrenzte mittlere Raum (V2) eine Kammerbreite aufweist, die das 0,8-fache bis 1,2-fache der Breite eines Außenraums (V1, V3) beträgt.

7. Tablett-Transportwagen nach einem der Ansprüche 1 bis 6, **dadurch gekennzeichnet, dass** in dem von den Trennwänden (5) begrenzten Mittelraum (V2) ein Halter (15) zur Aufnahme mindestens einer eutektischen Kältespeicherplatte (16) angeordnet ist.

8. Tablett-Transportwagen nach einem der Ansprüche 1 bis 7, **dadurch gekennzeichnet, dass** die Türen (8) als Schwenktüren ausgebildet sind und einen Türflügel (17) aufweisen, der um eine zur Seitenwand (3) benachbarte Achse (18) verschwenkbar ist und in der Öffnungsstellung an der Seitenwand (3) anliegt.

9. Tablett-Transportwagen nach Anspruch 8, **dadurch gekennzeichnet, dass** die Breite der Türflügel (17) kleiner ist als die Breite der Seitenwände (3).

10. Tablett-Transportwagen nach Anspruch 8 oder 9, **dadurch gekennzeichnet, dass** in den Eckbereichen des Transportwagens Stangen (19) zum Greifen angeordnet sind, die sich vom Boden (20) des Transportwagens bis zu einer oberen Abdeckung (21) vertikal erstrecken, und dass die Türflügel (17) drehbeweglich an zwei der Stangen (19) angeschlagen sind.

## Claims

1. A tray transport trolley with
an interior space (4) bordered by a front side (1), a rear side (2) and side walls (3),
two separating walls (5) that extend from the front side (1) to the rear side (2), and several vertically spaced apart receiving slots (6) for inserting food trays (7), and
doors (8) for opening and closing the interior space (4),
wherein the interior space (4) is divided by the separating walls (5) into three thermally distinct rooms (V1, V2, V3), and accommodates four stacks (S) of food trays (7), which each rest on support elements (9) on a side wall (3), and protrude into the central space (V2) bordered by the two separating walls (5), wherein a respective two food trays (7) can be placed next to each other on the front side (1) and rear side (2), and a respective two food trays (7) can be arranged one in back of the other in the receiving slots (6), **characterized in that** one of the two exterior spaces (V3) bordered by a side wall (3) and a separating wall (5) is sealed by a solid front wall (12) on the front side (1), that the other exterior space (V1) also bordered by a side wall (3) and separating wall (5) exhibits a solid rear wall (13) on the rear side (2), and that doors diagonally offset relative to each other are arranged on the front side (1) and rear side (2), and seal the central space (V2) as well as one of the two exterior spaces (V1, V3).

2. The tray transport trolley according to claim 1, **characterized in that** the separating walls (5) are designed as comb-like support elements, and exhibit a rear web (14) that is connected with the adjoining front wall (12) or rear wall (13).

3. The tray transport trolley according to claim 1 or 2, **characterized in that** the food trays (7) are supported and guided on the support elements (9) allocated to a side wall (3) and in the receiving slots (6) of a separating wall (5), and project into the central space (V2) with a salient end.

4. The tray transport trolley according to one of claims 1 to 3, **characterized in that** the side walls (3), the front wall (12), the rear wall (13), as well as the wings (17) of the doors (8) are made out of thermally insulated panels.

5. The tray transport trolley according to one of claims 1 to 4, **characterized in that** the separating walls (5) are made out of plastic plates.

6. The tray transport trolley according to one of claims 1 to 5, **characterized in that** the two exterior spaces (V1, V3) bordered by a respective side wall (3) and separating wall (5) exhibit the same width, and that the central space (V2) bordered by the separating walls (5) exhibits a chamber width measuring 0.8 to 1.2 times the width of an exterior space (V1, V3).

7. The tray transport trolley according to one of claims 1 to 6, **characterized in that** a retainer (15) for accommodating at least one eutectic cold storage plate (16) is arranged in the central space (V2) bordered by the separating walls (5).

8. The tray transport trolley according to one of claims 1 to 7, **characterized in that** the doors (8) are designed as swingeing doors, and exhibit a wing (17) that can swivel around an axis (18) adjacent to the side wall (3), and abuts the side wall (3) in the open position.

9. The tray transport trolley according to claim 8, **characterized in that** the width of the wings (17) is less than the width of the side walls (3).

10. The tray transport trolley according to claim 8 or 9, **characterized in that** the corner regions of the transport trolley accommodate gripping rods (19), which extend vertically from the floor (20) of the transport trolley to an upper cover (21), and that the wings (17) are rotationally fastened to two of the rods (19).

## Revendications

1. Chariot de transport de plateaux avec
un espace intérieur (4) délimité par une face avant (1), une face arrière (2) et des faces latérales (3),
deux parois de séparation (5), qui s'étendent de la face avant (1) vers la face arrière (2) et qui comportent plusieurs encoches de réception (6) écartées à la verticale pour insérer des plateaux-repas (7) et
des portes (8) pour ouvrir et fermer l'espace intérieur (4),
l'espace intérieur (4) étant divisé par des parois de séparation (5) en trois espaces (V1, V2, V3) thermiquement séparés et recevant quatre piles (S) de plateaux-repas (7) qui reposent chacun sur des éléments d'appui (9) sur une paroi latérale (3) et qui débordent dans l'espace central (V2) délimité par les deux parois de séparation (5), chaque fois deux plateaux-repas (7) pouvant être placés côte à côte sur la face avant et sur la face arrière (2) et chaque fois deux plateaux repas (7) pouvant être placés l'un derrière l'autre dans les encoches de réception (6) **caractérisé en ce que** l'un des espaces extérieurs (V3) délimité par une paroi latérale (3) et une paroi de séparation (5) est fermé sur la face avant (1) par une paroi avant (12) fixe, **en ce que** l'autre espace extérieur (V1) également délimité par une paroi latérale (3) et une paroi de séparation (5) comporte sur la face arrière (2) une paroi arrière (13) fixe et **en ce que** sur la paroi avant (1) et sur la paroi arrière (2) sont placées des portes (8) mutuellement déportées à la verticale, qui ferment l'espace central (V2) ainsi que l'un des deux espaces extérieurs (V1, V3).

2. Chariot de transport de plateaux selon la revendication 1, **caractérisé en ce qu'**en tant qu'éléments porteurs, les parois de séparation (5) sont conçues en peigne et comportent une barrette (14) arrière qui est reliée avec la paroi avant (12) ou paroi arrière (13) adjacente.

3. Chariot de transport de plateaux selon la revendication 1 ou 2, **caractérisé en ce que** les plateaux-repas (7) sont soutenus et guidés sur des éléments d'appui (9) associés à l'une (3) des parois latérales ainsi que dans les encoches de réception (6) d'une paroi de séparation (5) et débordent par une extrémité saillante dans l'espace central (V2).

4. Chariot de transport de plateaux selon l'une quelconque des revendications 1 à 3, **caractérisé en ce que** les parois latérales (3), la paroi avant (12), la paroi arrière (13) ainsi que les battants (17) des portes (8) consistent dans des panneaux calorifugés.

5. Chariot de transport de plateaux selon l'une quelconque des revendications 1 à 4, **caractérisé en ce que** les parois de séparation (5) consistent dans des plaques en matière plastique.

6. Chariot de transport de plateaux selon l'une quelconque des revendications 1 à 5, **caractérisé en ce que** les espaces extérieurs (V1, V3) délimités chacun par une paroi latérale (3) et une paroi de séparation ont la même largeur et **en ce que** l'espace central (V2) délimité par les parois de séparation (5) présente une largeur de compartiment, qui correspond à de 0,8 fois à de 1,2 fois la largeur d'un espace extérieur (V1, V3).

7. Chariot de transport de plateaux selon l'une quelconque des revendications 1 à 6, **caractérisé en ce que** dans l'espace central (V2) délimité par les parois de séparation (5) est disposé un support (15) pour la réception d'au moins une plaque eutectique accumulatrice de froid 16).

8. Chariot de transport de plateaux selon l'une quelconque des revendications 1 à 7, **caractérisé en ce que** les portes (8) sont conçues en tant que portes à battant et comportent un battant (17) qui peut pivoter autour d' un axe (18) voisin d'une paroi latérale, (3) et qui en position d'ouverture est adjacent à la paroi latérale (3).

9. Chariot de transport de plateaux selon la revendication 8, **caractérisé en ce que** la largeur des battants de porte (17) est inférieure à la largeur des parois latérales (3).

10. Chariot de transport de plateaux selon la revendication 8 ou 9, **caractérisé en ce que** dans les zones angulaires du chariot de transport sont placées des barres (19) de préhension, qui s'étendent à la verticale du fond (20) du chariot de transport jusqu'à un recouvrement (21) supérieur et **en ce que** les battants de porte (17) sont montés de façon mobile en rotation sur deux des barres (19).
